# FASCICULE DE BREVET EUROPEEN

(11) **EP 3 849 833 B1**
(45) Date de publication et mention de la délivrance du brevet: **26.10.2022**
(21) Numéro de dépôt: 19786376.4
(22) Date de dépôt: 10.09.2019
(51) Int. Cl.: B60H 1/00, B60H 1/32

(54) **CIRCUIT DE LIQUIDE CALOPORTEUR**
WÄRMETRANSFERFLÜSSIGKEITSKREISLAUF
HEAT TRANSFER LIQUID CIRCUIT

(30) Priorité: 12.09.2018 FR 1858148
(43) Date de publication de la demande: 21.07.2021
(73) Titulaire: VALEO SYSTEMES THERMIQUES, 78320 Le Mesnil Saint-Denis (FR)
(72) Inventeur: BENOUALI, Jugurtha, 78322 LE MESNIL SAINT-DENIS CEDEX (FR); RAUX, Thierry, 78322 LE MESNIL SAINT-DENIS CEDEX (FR); ZEVACO, Philippe, 78322 LE MESNIL SAINT-DENIS CEDEX (FR)
(74) Mandataire: Valeo Systèmes Thermiques
(86) Numéro de dépôt international: PCT/FR2019/052082
(87) Numéro de publication internationale: WO 2020/053516

(56) Documents cités:
- EP-A1- 2 263 894
- WO-A1-2013/124173
- FR-A1- 3 052 236
- US-A1- 2015 121 922
- US-A1- 2015 362 268

## Description

Le domaine de la présente invention est celui des circuits de liquide caloporteur exploités pour chauffer ou refroidir une enceinte ou un composant d'un véhicule, notamment d'un véhicule automobile.

Les véhicules automobiles sont couramment équipés d'un circuit de liquide caloporteur utilisé pour chauffer ou refroidir différentes enceintes ou différents composants du véhicule. Il est notamment connu d'utiliser ce circuit de liquide caloporteur pour maintenir à température constante un dispositif de stockage d'énergie électrique d'une chaine de traction électrique du véhicule, le dispositif de stockage d'énergie électrique étant utilisé pour fournir une énergie électrique capable de mettre en mouvement le véhicule. Ainsi, le circuit de liquide caloporteur peut refroidir le dispositif de stockage d'énergie électrique pendant son utilisation en phase de roulage, le circuit de liquide caloporteur pouvant également réchauffer le dispositif de stockage d'énergie électrique lorsque cela est nécessaire, par exemple lors d'un arrêt du véhicule.

Il est également connu d'utiliser un tel circuit de liquide caloporteur afin de traiter thermiquement un flux d'air envoyé dans l'habitacle du véhicule, permettant ainsi d'augmenter ou de diminuer la température de l'habitacle du véhicule.

Le circuit de liquide caloporteur connu utilise de nombreux composants réalisant chacun une tâche spécifique, impliquant ainsi un routage du circuit de liquide caloporteur particulièrement compliqué, formant ainsi un inconvénient du circuit de liquide caloporteur connu.

Les documents US 2015/362268 A1 et FR 3 052 236 A1 divulguent des circuits de liquide caloporteur connus.

La présente invention a pour but de proposer un circuit de liquide caloporteur permettant, à un coût acceptable et avec un nombre de composants limité, de réaliser au moins cinq fonctions parmi lesquelles on trouve une fonction de chauffage de l'habitacle à partir d'un dispositif de chauffage électrique, une fonction de refroidissement de l'habitacle, une fonction de chauffage ou de refroidissement du dispositif de stockage d'énergie électrique, une fonction de chauffage de l'habitacle à partir d'une boucle de fluide réfrigérant et enfin une fonction de récupération d'énergie sur un composant de la chaine de traction électrique du véhicule.

L'invention y parvient grâce à un circuit de liquide caloporteur pour véhicule électrique mis en mouvement au moins en partie par un moteur électrique, le circuit comprenant une première branche qui comporte au moins une pompe, un premier échangeur de chaleur configuré pour échanger des calories entre le liquide caloporteur et un fluide réfrigérant, un dispositif de chauffage électrique et un deuxième échangeur de chaleur configuré pour échanger des calories entre le liquide caloporteur et un flux d'air destiné à être envoyé dans un habitacle du véhicule, le circuit comprenant une deuxième branche montée en parallèle de la première branche, la deuxième branche comprenant un troisième échangeur de chaleur couplé thermiquement à un composant d'une chaine de traction électrique du véhicule, caractérisé en ce que le circuit comprend une troisième branche disposée en parallèle de la première branche et raccordée à cette dernière par un organe de distribution du liquide caloporteur, le circuit comprenant une quatrième branche montée en parallèle de la deuxième branche et raccordée à celle-ci par un dispositif de bifurcation, la quatrième branche comprenant un quatrième échangeur de chaleur configuré pour échanger des calories entre le liquide caloporteur et un fluide réfrigérant.

Selon un exemple, l'organe de distribution distribue le liquide caloporteur à la deuxième branche et/ou à la troisième branche.

Le véhicule est électrique en ce sens qu'il est mis en mouvement au moins en partie grâce à un moteur électrique. C'est le cas d'un véhicule hybride qui utilise également un moteur à combustion interne pour se déplacer. Avantageusement, le véhicule est exclusivement mu par un moyen électrique, notamment un ou plusieurs moteurs électriques. Ainsi, le composant de la chaine de traction électrique peut être, par exemple, un moteur électrique principal assurant le déplacement du véhicule, un dispositif de stockage d'énergie alimentant en énergie électrique le moteur principal, ou encore un module électronique de puissance permettant par exemple de convertir ou de délivrer l'énergie électrique au moteur électrique principal. Ainsi, selon un exemple de réalisation de cette configuration, le circuit de liquide caloporteur permet d'assurer le maintien d'une température stable ou sensiblement stable au niveau du dispositif de stockage d'énergie afin d'assurer une plus grande longévité au dispositif de stockage d'énergie.

L'organe de distribution est par exemple une vanne à trois voies, chacune des voies pouvant être configurée dans une position ouverte, dans laquelle le liquide caloporteur circule, ou dans une position fermée dans laquelle le liquide caloporteur est stoppé, permettant ainsi plusieurs configurations de circulation du liquide caloporteur dans le circuit.

La troisième branche s'étend entre une partie amont de la première branche et une partie aval de la première branche, selon le sens de circulation du liquide caloporteur. Autrement dit, le début de la troisième branche est situé en amont d'un premier composant, selon le sens de circulation du liquide caloporteur, de la première branche, la première branche et la troisième branche formant ainsi une première jonction. La fin de la troisième branche est située en aval d'un dernier composant, selon le sens de circulation du liquide caloporteur, de la première branche, la première branche et la troisième branche formant ainsi une deuxième jonction, l'organe de distribution étant situé au niveau de la première jonction ou de la deuxième jonction. Ainsi, lorsque le liquide caloporteur passe par la troisième branche, il ne circule à travers aucun des composants de la première branche, les composants de la première branche étant au moins la pompe, le premier échangeur de chaleur, le dispositif de chauffage électrique, tel qu'un radiateur électrique et le deuxième échangeur de chaleur.

Cette configuration permet ainsi de mutualiser la fonction de chauffage du dispositif de chauffage électrique de la première branche afin de permettre le chauffage de plusieurs composants ou enceintes du véhicule, tel qu'un composant de la chaine de traction électrique ou encore l'habitacle du véhicule.

Le circuit de liquide caloporteur comprend avantageusement au moins un des perfectionnements ci-dessous, les caractéristiques techniques formant ces perfectionnements pouvant être prises seules ou en combinaison :
- les composants de la première branche sont montés en série les uns par rapport aux autres. Autrement dit, le liquide caloporteur, lorsqu'il circule dans la première branche, passe au travers d'un premier composant de la première branche, puis au travers d'un deuxième composant de la première branche ;
- le dispositif de chauffage électrique est intercalé entre le premier échangeur de chaleur et le deuxième échangeur de chaleur. De manière avantageuse, au sein de la première branche, le liquide caloporteur traverse le premier échangeur de chaleur, puis le dispositif de chauffage électrique, puis enfin le deuxième échangeur de chaleur. Selon une première alternative, la pompe est située en aval des autres composants de la première branche, selon le sens de circulation du liquide caloporteur, c'est-à-dire que le liquide caloporteur traverse d'abord le premier échangeur de chaleur, puis le dispositif de chauffage électrique, puis le deuxième échangeur de chaleur, puis enfin la pompe. Selon une deuxième alternative, l'ordre des composants de la première branche peut être choisi selon chacune de l'intégralité des combinaisons possibles ;
- le dispositif de chauffage électrique est configuré pour chauffer le liquide caloporteur à partir d'une énergie électrique à haute tension. Ainsi, le dispositif de chauffage électrique est alimenté électriquement à partir d'une tension électrique strictement supérieure à 48 volts, de préférence comprise entre 48 volts et 800 volts ;
- la pompe est intercalée entre l'organe de distribution et le deuxième échangeur de chaleur ;
- la troisième branche est dépourvue d'échangeur de chaleur. En d'autres termes, la troisième branche est une conduite .

Suivant l'invention, - le circuit comprend une quatrième branche montée en parallèle de la deuxième branche et raccordée à celle-ci par un dispositif de bifurcation, la quatrième branche comprenant un quatrième échangeur de chaleur configuré pour échanger des calories entre le liquide caloporteur et un fluide réfrigérant. Ainsi, la deuxième branche et la quatrième branche forment une troisième jonction et une quatrième jonction, le dispositif de bifurcation étant situé au niveau de la troisième jonction ou de la quatrième jonction. Le dispositif de bifurcation est par exemple une vanne à trois voies, chacune des voies pouvant être configurée dans une position ouverte dans laquelle le liquide caloporteur circule, ou dans une position fermée dans laquelle la circulation du liquide caloporteur est interrompue, permettant ainsi plusieurs configurations de circulation du liquide caloporteur dans le circuit .

De plus, le circuit selon l'invention comprend avantageusement les caractéristiques optionnelles suivantes: - la deuxième branche comprend une pompe, appelée deuxième pompe, différente de la pompe de la première branche, ci-après appelée première pompe. La deuxième pompe permet la circulation du liquide caloporteur au sein de la deuxième branche et/ou de la quatrième branche. Ainsi, le liquide caloporteur peut être mis en circulation au sein de la deuxième branche, et/ou la quatrième branche, indépendamment de la circulation du liquide caloporteur dans la première et/ou la deuxième branche ;
- la première branche et/ou la deuxième branche comprend au moins un clapet anti-retour. Le clapet anti-retour permet d'assurer le sens de circulation du liquide caloporteur dans la première branche et/ou la deuxième branche. De manière avantageuse, le clapet anti-retour est situé en amont, selon le sens de circulation du liquide caloporteur, d'une jonction d'entrée entre la première branche et la troisième branche ou d'une deuxième jonction d'entrée entre la deuxième branche et la quatrième branche. Préférentiellement, le clapet anti-retour assure le sens de circulation du liquide caloporteur dans la première branche depuis la jonction d'entrée vers une jonction de sortie. De manière analogue, préférentiellement, le clapet anti-retour assure le sens de circulation du liquide caloporteur dans la deuxième branche depuis la deuxième jonction d'entrée vers une deuxième jonction de sortie. En particulier, la première jonction constitue la jonction d'entrée, la deuxième jonction constitue la jonction de sortie, la troisième jonction constitue la deuxième jonction d'entrée, et la quatrième jonction constitue la deuxième jonction de sortie ;
- le circuit comprend une cinquième branche disposée en parallèle de la première branche, la cinquième branche comprenant un cinquième échangeur de chaleur configuré pour réaliser un échange de chaleur entre le liquide caloporteur et un flux d'air extérieur à l'habitacle du véhicule ;
- la cinquième banche comprend une vanne d'arrêt. La vanne d'arrêt de la cinquième branche permet d'autoriser ou d'interdire la circulation du liquide caloporteur dans la cinquième branche. La vanne d'arrêt peut être située en amont ou en aval, selon le sens de circulation du liquide caloporteur, du cinquième échangeur de chaleur ;
- le circuit comprend une sixième branche disposée en parallèle de la deuxième branche, la sixième branche comprenant un sixième échangeur de chaleur couplé thermiquement à un composant de la chaine de traction électrique du véhicule, appelé deuxième composant, différent du composant, appelé premier composant, couplé thermiquement au troisième échangeur de chaleur présent dans la deuxième branche du circuit ;
- la sixième branche comprend un septième échangeur de chaleur en série avec le sixième échangeur de chaleur ;
- la sixième branche comprend une pompe, appelée troisième pompe et distincte de la première pompe présente dans la première branche et de la deuxième pompe présente dans la deuxième branche. Ainsi, le liquide caloporteur peut circuler dans la cinquième et/ou la sixième branche de manière indépendante de sa circulation dans la première branche, la deuxième branche, la troisième branche ou la quatrième branche ;
- la sixième branche comprend au moins un organe d'arrêt. L'organe d'arrêt peut être par exemple une vanne deux voies ou un clapet anti-retour ;
- le liquide caloporteur est de l'eau ou une solution aqueuse comprenant de l'éthylène glycol, ou tout autre composé chimique. Cette configuration permet l'utilisation du circuit de liquide caloporteur lorsque le véhicule est stocké ou utilisé par des températures extérieures inférieures à o°C, l'utilisation d'éthylène glycol permettant de diminuer la température de solidification du liquide caloporteur, et ainsi d'éviter une détérioration des éléments du circuit lorsque celui-ci est exposé à des températures extérieures négatives. De manière avantageuse, le liquide caloporteur comprend également un additif anti-corrosion protégeant le circuit contre la corrosion.

Le circuit selon l'invention peut être utilisé dans un mode de chauffage de l'habitacle, où l'organe de distribution impose une circulation du liquide caloporteur de la première branche vers la troisième branche, la pompe de la première branche étant activée, le dispositif de chauffage électrique étant de préférence électriquement alimenté.

Dans ce mode, la circulation du liquide caloporteur est interrompue au niveau de la deuxième branche, de la quatrième branche de la cinquième branche et de la sixième branche. Par exemple, la deuxième pompe et la troisième pompe sont interrompues ou inactives, permettant au liquide caloporteur, par l'intermédiaire de la configuration de l'organe de distribution interdisant la circulation du liquide caloporteur entre la première branche, la cinquième branche et la sixième branche, de circuler uniquement dans la première branche et la troisième branche.

Ainsi, lorsque le dispositif de chauffage électrique génère des calories, celles-ci sont transmises par le liquide caloporteur vers le deuxième échangeur de chaleur, permettant d'échanger ces calories avec le flux d'air passant au travers du deuxième échangeur de chaleur afin de chauffer l'habitacle du véhicule.

Le circuit selon l'invention peut être utilisé dans un mode de chauffage du premier composant de la chaine de traction électrique du véhicule, où l'organe de distribution et le dispositif de bifurcation imposent une circulation du liquide caloporteur de la première branche vers la deuxième branche, la pompe de la première branche et/ou la pompe de la deuxième branche étant activée.

Le chauffage du liquide caloporteur peut être obtenu par l'alimentation électrique du dispositif de chauffage de chauffage ou encore par l'échange de calories entre le premier échangeur de chaleur et le liquide caloporteur, le premier échangeur de chaleur étant thermiquement couplé à une boucle de fluide réfrigérant.

Dans ce mode, la circulation du liquide caloporteur est interrompue au niveau de la troisième branche, de la quatrième branche, de la cinquième branche et de la sixième branche. Par exemple, la troisième pompe est désactivée, l'organe d'arrêt empêchant la circulation du liquide caloporteur dans la sixième branche, la vanne d'arrêt située sur la cinquième branche étant dans une position fermée, l'organe de distribution et le dispositif de bifurcation interdisant la circulation du liquide caloporteur dans la troisième branche et dans la quatrième branche, respectivement.

Ainsi, le liquide caloporteur peut échanger des calories, générées par le dispositif de chauffage électrique ou alors captées au niveau du premier échangeur de chaleur, avec le troisième échangeur de chaleur situé sur la deuxième branche, permettant le chauffage du premier composant de la chaine de traction électrique du véhicule. Avantageusement, le premier composant de la chaine de traction électrique est, dans ce mode, un dispositif de stockage d'énergie, le chauffage du dispositif de stockage d'énergie permettant lorsque les conditions le nécessitent, par exemple en cas de températures extérieures faibles, d'augmenter la température du dispositif de stockage d'énergie afin d'augmenter sa longévité.

Le circuit selon l'invention peut être utilisé dans un mode de refroidissement du premier composant de la chaine de traction électrique du véhicule, où le dispositif de bifurcation impose une circulation du liquide caloporteur entre la deuxième branche et la quatrième branche, la deuxième pompe étant activée.

Ainsi, le liquide caloporteur peut échanger des calories, générées au niveau du premier composant de la chaine de traction électrique et captées par le troisième échangeur de chaleur, avec le quatrième échangeur de chaleur.

De manière avantageuse selon ce mode, l'utilisation du circuit permet également de refroidir le deuxième composant de la chaine de traction électrique et/ou le troisième composant de la chaine de traction électrique, présents dans la sixième branche. Ainsi, l'organe de distribution impose une circulation du liquide caloporteur entre la première branche et la cinquième branche, le dispositif de bifurcation interdisant une circulation du liquide caloporteur entre la deuxième branche et la sixième branche, la première pompe et la troisième pompe étant activées. Ainsi, le liquide caloporteur peut capter des calories générées par le deuxième composant et/ou le troisième composant de la chaine de traction électrique et les décharger au niveau du cinquième échangeur de chaleur présent dans la cinquième branche, les calories étant alors dissipées au travers du flux d'air destiné à être envoyé à l'extérieur de l'habitacle. Cet effet est également obtenu en configurant l'organe de distribution pour qu'il interdise la circulation du liquide caloporteur dans la troisième branche, le liquide caloporteur captant les calories du fluide réfrigérant au niveau du premier échangeur de chaleur, le fluide réfrigérant assurant alors également le refroidissement du premier composant de la chaine de traction électrique par l'intermédiaire du troisième échangeur de chaleur situé dans la quatrième branche, le troisième échangeur de chaleur étant couplé au la boucle de fluide réfrigérant.

Ainsi, le circuit permet d'obtenir le refroidissement du premier composant de la chaine de traction électrique de manière indépendante du refroidissement du deuxième et/ou du troisième composant de la chaine de traction électrique du véhicule.

Le circuit selon l'invention peut être utilisé dans un mode de refroidissement d'un moteur électrique principal du véhicule, couplé thermiquement avec le sixième échangeur de chaleur ou le septième échangeur de chaleur, et de refroidissement de l'habitacle, où l'organe de distribution impose une circulation du liquide caloporteur entre la première branche et la cinquième branche, la première pompe et la troisième pompe étant activées.

Ainsi, l'organe de distribution interdit une circulation du liquide caloporteur entre la première branche et la troisième branche. La deuxième pompe est inactive et le dispositif de bifurcation interdit une circulation du liquide caloporteur entre la deuxième branche et la quatrième branche.

Ainsi, selon ce mode, le liquide caloporteur capte les calories générées par le moteur électrique, le moteur électrique étant alors le deuxième composant ou le troisième composant de la chaine de traction électrique, ces calories étant alors dissipées au niveau du cinquième échangeur de chaleur présent dans la cinquième branche. Ce mode permet également au liquide caloporteur d'être refroidi au niveau du premier échangeur de chaleur de la première branche, par l'intermédiaire d'un circuit de réfrigérant, le liquide caloporteur refroidissant alors, au niveau du deuxième échangeur de chaleur, le flux d'air envoyé dans l'habitacle du véhicule.

Le circuit selon l'invention peut être utilisé dans un mode de récupération de l'énergie d'un composant de la chaine de traction électrique couplé thermiquement avec un échangeur de chaleur situé sur la sixième branche, où le dispositif de bifurcation impose une circulation du liquide caloporteur entre la quatrième branche et la sixième branche, la troisième pompe étant activée.

Dans ce mode, le liquide caloporteur capte des calories générées par un composant de la chaine de traction électrique couplé thermiquement à un échangeur de chaleur de la sixième branche, ces calories étant alors dissipées lorsque le liquide caloporteur passe au travers du quatrième échangeur de chaleur présent dans la quatrième branche et relié à un circuit de fluide réfrigérant. De plus la circulation du liquide caloporteur est interrompue dans la deuxième branche par le dispositif de bifurcation, la deuxième pompe étant désactivée. Ainsi, cette configuration permet d'éviter le refroidissement du premier composant de la chaine de traction électrique couplé thermiquement avec le troisième échangeur de chaleur situé dans la deuxième branche, notamment lorsque le premier composant de la chaine de traction électrique est un dispositif de stockage d'énergie du véhicule.

En outre, la circulation du liquide caloporteur peut également être interrompue dans la première branche, dans la troisième branche et dans la cinquième branche, par exemple du fait de la configuration de l'organe de distribution concernant la première branche et la troisième branche, et de la vanne d'arrêt concernant la cinquième branche.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
- la figure est une représentation schématique d'un premier exemple de réalisation d'un circuit de liquide caloporteur ne faisant pas partie de l'invention ;
- la figure 2est une représentation schématique d'un deuxième exemple de réalisation d'un circuit de liquide caloporteur conforme à l'invention ;
- la figure 3 est une représentation schématique d'un troisième exemple de réalisation d'un circuit de liquide caloporteur conforme à l'invention ;
- la figure 4 est une représentation schématique d'un quatrième exemple de réalisation d'un circuit de liquide caloporteur conforme à l'invention ;
- les figures 5 à 9 illustrent le circuit de liquide caloporteur représenté à la figure 4 selon différents modes de fonctionnement.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Les termes amont et aval employés dans la description qui suit se réfèrent au sens de circulation du liquide caloporteur dans le circuit.

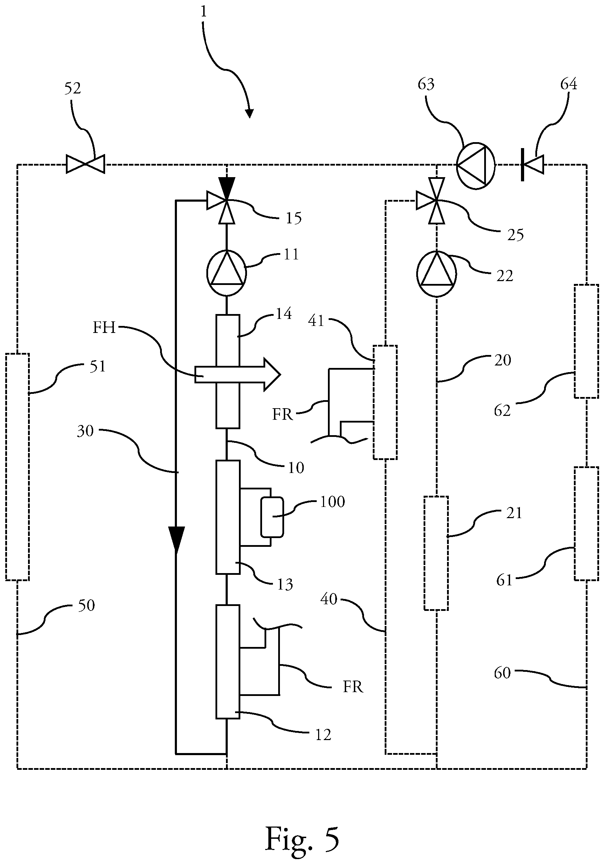

Dans les figures 5 à 9, les traits pleins illustrent une portion de circuit dans laquelle circule le liquide caloporteur ou un composant du circuit actif, tandis que les traits pointillés illustrent une absence de circulation du liquide caloporteur ou un composant du circuit passif. Dans ces figures, le sens de circulation du liquide caloporteur est symbolisé par une flèche.

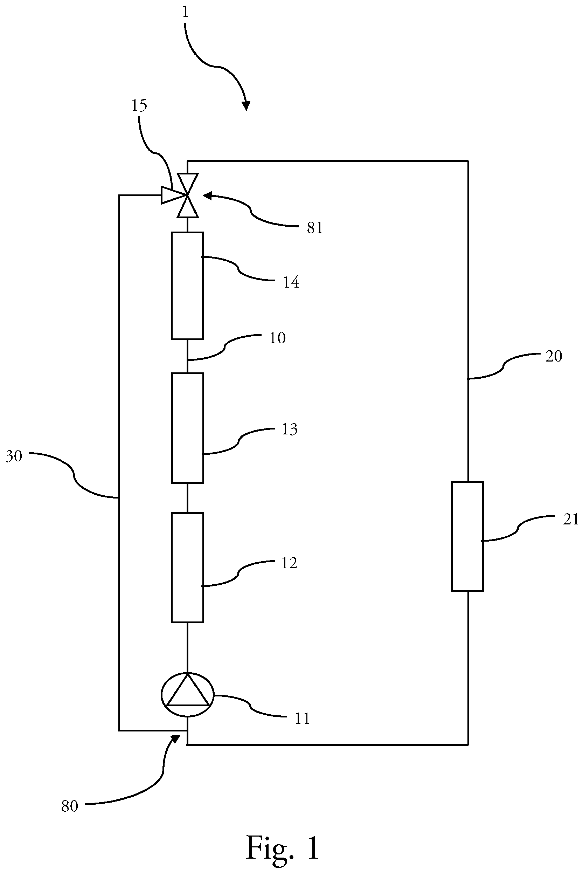

La figure 1 illustre une représentation schématique d'un premier exemple de réalisation d'un circuit de liquide caloporteur 1 ne faisant pas partie de l'invention.

Le circuit 1 est agencé pour être utilisé dans un véhicule électrique mis en mouvement au moins partiellement par une énergie électrique. Ainsi, le circuit de liquide caloporteur 1 comprend une première branche 10 et une deuxième branche 20, la première branche 10 et la deuxième branche 20 formant une boucle. La première branche 10 comprend une première pompe 11, un premier échangeur de chaleur 12, un dispositif de chauffage électrique 13 et un deuxième échangeur de chaleur 14. La deuxième branche 20 comprend un troisième échangeur de chaleur 21 couplé thermiquement à un composant d'une chaine de traction électrique du véhicule électrique dans lequel est monté le circuit 1.

La première pompe 11 permet la mise en circulation du liquide caloporteur au sein du circuit 1. Le premier échangeur de chaleur 12 permet l'échange de calories entre le liquide caloporteur et un fluide réfrigérant circulant dans un circuit de fluide réfrigérant FR qui équipe le véhicule. Le dispositif de chauffage électrique 13, alimenté électriquement par une source électrique 100, permet de transformer une énergie électrique en énergie thermique, afin de chauffer le liquide caloporteur, permettant ainsi le chauffage d'un composant ou d'un fluide tel qu'un flux d'air couplé thermiquement au circuit 1 de liquide caloporteur. Le deuxième échangeur de chaleur 14 permet d'échanger des calories entre le liquide caloporteur le traversant et un flux d'air destiné à être envoyé à l'intérieur d'un habitacle du véhicule. Le premier échangeur de chaleur 12 est intercalé entre la première pompe 11 et le dispositif de chauffage électrique 13, le dispositif de chauffage électrique 13 étant lui-même intercalé entre le premier échangeur de chaleur 12 et le deuxième échangeur de chaleur 14.

Le circuit 1 comprend une troisième branche 30 disposée en parallèle de la première branche 10 et raccordée à cette dernière par un organe de distribution 15 du liquide caloporteur entre la première branche 10, la deuxième branche 20 et la troisième branche 30. L'organe de distribution 15 est ici une vanne trois voies, chaque voie pouvant être configurée de manière indépendante dans une position ouverte autorisant la circulation du liquide caloporteur, ou dans une position fermée interdisant la circulation du liquide caloporteur. La première branche 10 et la troisième branche 30 forment ainsi une première jonction 80 et une deuxième jonction 81, l'organe de distribution 15 étant situé au niveau de la deuxième jonction 81. La première pompe 11, le premier échangeur de chaleur 12, le dispositif de chauffage électrique 13 et le deuxième échangeur de chaleur 14 sont situés, sur la première branche 10, entre la première jonction 80 et la deuxième jonction 81.

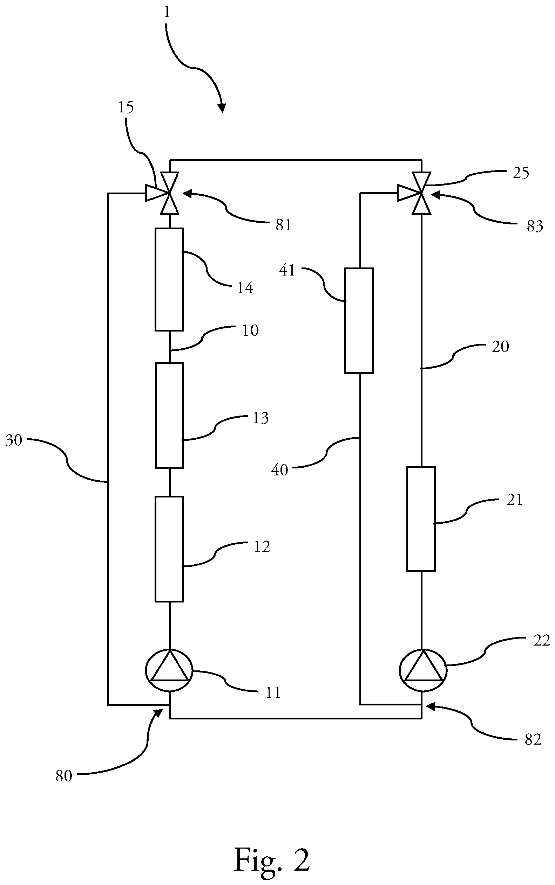

La figure 2 illustre un deuxième exemple de réalisation d'un circuit 1 conforme à l'invention. Le circuit 1 comprend une quatrième branche 40 disposée en parallèle de la deuxième branche 20, la deuxième branche et la quatrième branche 40 étant raccordées par un dispositif de bifurcation 25, le dispositif de bifurcation 25 étant ici une vanne trois voies. Ainsi, la deuxième branche 20 et la quatrième branche 40 forment une troisième jonction 82 et une quatrième jonction 83, le troisième échangeur de chaleur 21 étant situé, sur la deuxième branche 20, entre la troisième jonction 82 et la quatrième jonction 83, le dispositif de bifurcation 25 étant situé au niveau de la quatrième jonction 83.

La quatrième branche 40 comprend un quatrième échangeur de chaleur 41 configuré pour échanger des calories entre le liquide caloporteur et un fluide réfrigérant circulant dans le circuit de fluide réfrigérant FR équipant le véhicule. Ainsi, le premier échangeur de chaleur 12 et le quatrième échangeur de chaleur 41 sont couplés thermiquement au même circuit de fluide réfrigérant FR.

La deuxième branche 20 comprend une deuxième pompe 22, permettant ainsi la mise en circulation du liquide caloporteur indépendamment du fonctionnement de la première pompe 11. La deuxième pompe 22 est intercalée entre la troisième jonction 82 et le troisième échangeur 21.

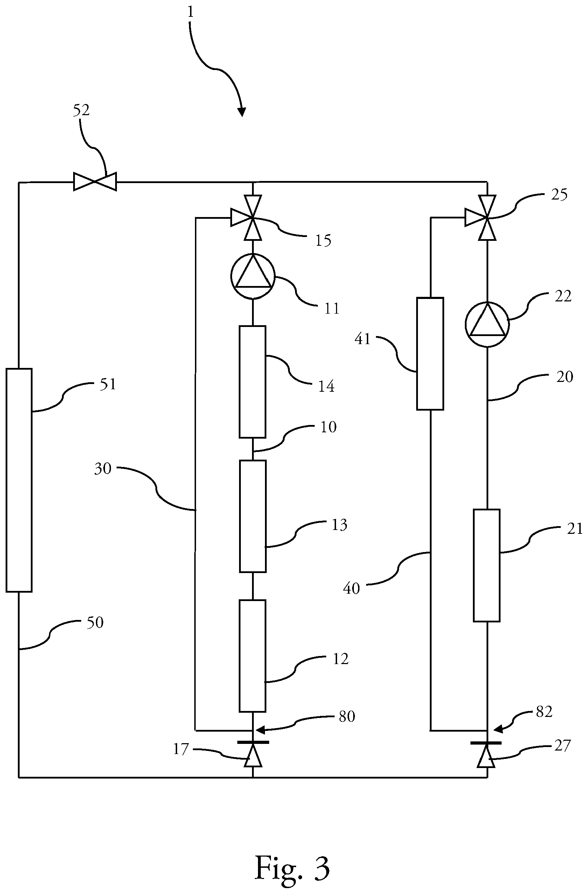

La figure 3 illustre un troisième exemple de réalisation d'un circuit 1 conforme à l'invention. Le circuit 1 comprend une cinquième branche 50 disposée en parallèle de la première branche 10. La cinquième branche 50 comprend un cinquième échangeur de chaleur 51 configuré pour réaliser un échange de chaleur entre le liquide caloporteur et un flux d'air extérieur à l'habitacle du véhicule.

La cinquième branche 50 comprend une vanne d'arrêt 52, permettant ainsi d'autoriser ou d'interdire la circulation du liquide caloporteur dans la cinquième branche 50.

Dans cet exemple de réalisation, la première pompe 11 est intercalée entre le deuxième échangeur de chaleur 14 et l'organe de distribution 15. De manière similaire, la deuxième pompe 22 est intercalée entre le troisième échangeur de chaleur 21 et le dispositif de bifurcation 25.

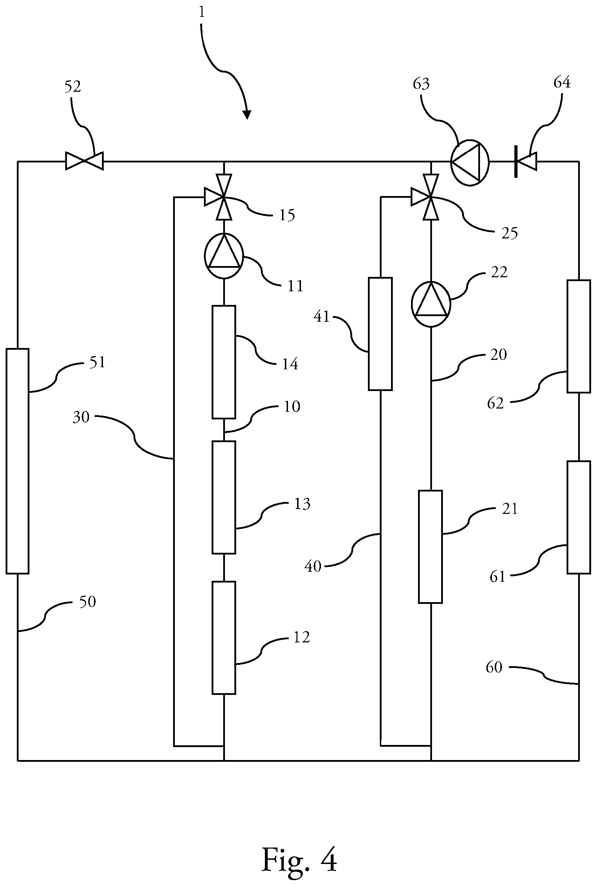

La première branche 10 comprend un premier clapet anti-retour 17 disposé sur la première branche 10, immédiatement en amont de la première jonction 81 lorsque le liquide caloporteur vient du cinquième échangeur de chaleur 51. De manière similaire, la deuxième branche 20 comprend un deuxième clapet anti-retour 27 disposé sur la deuxième branche 20, immédiatement en amont de la troisième jonction 82 lorsque le liquide caloporteur vient du cinquième échangeur de chaleur 51. Le premier clapet anti-retour 17 et le deuxième clapet anti-retour 27 permettent d'assurer le sens de circulation du liquide caloporteur dans la première branche 10 et dans la deuxième branche 20, respectivement. La figure 4 illustre un quatrième exemple de réalisation d'un circuit 1 conforme à l'invention.

Le circuit 1 comprend une sixième branche 60 disposée en parallèle de la deuxième branche 20. La sixième branche 60 comprend un sixième échangeur de chaleur 61 couplé thermiquement à un deuxième composant, tel qu'un moteur électrique, de la chaine de traction électrique du véhicule. La sixième branche 60 comprend un septième échangeur de chaleur 62 en série avec le sixième échangeur de chaleur 61. Le septième échangeur de chaleur 62 est couplé thermiquement à un troisième composant, tel qu'un module électronique de puissance, de la chaine de traction électrique du véhicule.

La sixième branche 60 comprend une troisième pompe 63 assurant la circulation du liquide caloporteur dans la sixième branche 60, et un troisième clapet anti-retour 64 permettant d'assurer le sens de circulation du liquide caloporteur au sein de la sixième branche 60. Le septième échangeur de chaleur 62 est intercalé entre le troisième clapet anti-retour 64 et le sixième échangeur de chaleur 61, le troisième clapet anti-retour 64 étant lui-même intercalé entre la troisième pompe 63 et le septième échangeur de chaleur 62. Ainsi, au sein de la sixième branche 60, le liquide caloporteur traverse selon cet ordre le sixième échangeur de chaleur 61, le septième échangeur de chaleur 62, le troisième clapet anti-retour 64 puis enfin la troisième pompe 63.

La figure 5 représente le circuit 1 illustré à la figure 4, le circuit 1 étant utilisé selon un mode d'utilisation permettant le chauffage de l'habitacle du véhicule. Ce mode d'utilisation s'applique également aux circuits illustrés aux figures 1 à 3, les composants du circuit utilisés dans ce mode étant également présents dans les circuits illustrés sur ces figures.

Ainsi, la première pompe 11 est active, permettant la circulation du liquide caloporteur dans la première branche 10 et dans la troisième branche 30. En outre, l'organe de distribution 15 impose au liquide caloporteur de circuler uniquement entre la première branche 10 et la troisième branche 30. En effet, une vanne de la vanne trois voies formant un exemple de l'organe de distribution 15 reliant la première branche 10 au reste du circuit 1, est dans une position fermée, le liquide caloporteur contenu au sein de la première branche 10 ne pouvant alors circuler que dans la troisième branche 30. Ainsi, le liquide caloporteur, mis en mouvement par la première pompe 11, traverse le premier échangeur de chaleur 12 puis le dispositif de chauffage électrique 13.

Le liquide caloporteur est chauffé lors de son passage dans le premier échangeur 12 utilisé comme condenseur et/ou lors de son passage à travers le dispositif de chauffage électrique 13 alimenté électriquement par la source électrique 100. Le liquide caloporteur traverse alors le deuxième échangeur de chaleur 14, dans lequel les calories du liquide caloporteur sont dissipées au travers du flux d'air FH destiné à être envoyé dans l'habitacle du véhicule, permettant ainsi le chauffage de l'habitacle. Le liquide caloporteur circule alors au travers de la première pompe 11 puis de l'organe de distribution 15 qui le dirige alors dans la troisième branche 30, afin que le liquide caloporteur soit injecté dans la première branche 10, en amont du premier échangeur de chaleur 12 avant d'effectuer un nouveau cycle de circulation.

La deuxième pompe 22 et la troisième pompe 63 sont inactives, empêchant ainsi toute circulation du liquide caloporteur dans la deuxième branche 20, la quatrième branche 40, la cinquième branche 50 et la sixième branche 60.

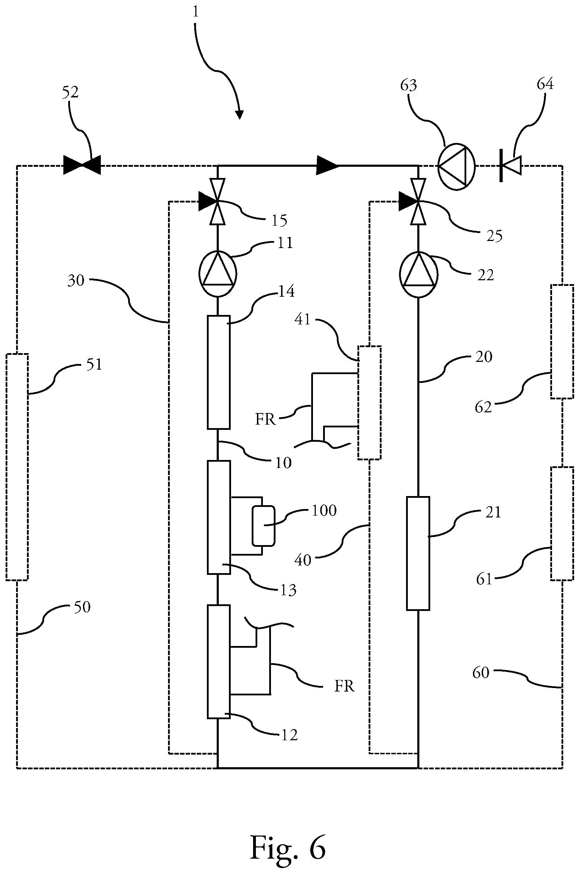

La figure 6 représente le circuit 1 illustré à la figure 4, le circuit 1 étant utilisé selon un mode d'utilisation permettant le chauffage du premier composant de la chaine de traction électrique du véhicule, le premier composant de la chaine de traction électrique étant couplé thermiquement au troisième échangeur de chaleur 21 situé sur la deuxième branche 20. Ce mode d'utilisation s'applique également aux circuits illustrés aux figures 1 à 3, les composants du circuit utilisés dans ce mode étant également présents dans les circuits illustrés sur ces figures.

L'organe de distribution 15 et le dispositif de bifurcation 25 sont configurés pour autoriser le liquide caloporteur à circuler uniquement dans la première branche 10 et dans la deuxième branche 20. Plus particulièrement, l'organe de distribution 15 interdit la circulation du liquide caloporteur dans la troisième branche 30. De manière similaire, le dispositif de bifurcation 25 interdit la circulation du liquide caloporteur dans la quatrième branche 40. En outre, la vanne d'arrêt 52 située sur la cinquième branche 50 et le troisième clapet anti-retour 64 interdit la circulation du liquide caloporteur dans la cinquième branche 50 et dans la sixième branche respectivement. De plus, la première pompe 11 ou la deuxième pompe 22 est activée afin de permettre la mise en circulation du liquide caloporteur entre la première branche 10 et la deuxième branche 20, la troisième pompe 63 étant désactivée. Selon l'activation de la première pompe 11 ou de la deuxième pompe 22, le liquide caloporteur circule dans un premier sens ou dans un deuxième sens, respectivement. Tel qu'illustré à la figure 6, la première pompe 11 est activée et la deuxième pompe 22 est désactivée, le liquide caloporteur circulant alors dans le premier sens.

Ainsi, le liquide caloporteur circule à travers la première branche 10 dans laquelle il est chauffé, notamment par l'intermédiaire du premier échangeur de chaleur 12 et/ou du radiateur électrique 13. Le liquide caloporteur traverse alors le dispositif de bifurcation 25 avant de circuler dans la deuxième branche 20. Le liquide caloporteur passe alors au travers du troisième échangeur de chaleur 21 où il dissipe les calories captées dans la première branche 10, permettant de chauffer le premier composant de la chaine de traction électrique du véhicule, le premier composant de la chaine de traction électrique du véhicule étant avantageusement un dispositif de stockage d'énergie, telle qu'une batterie, fournissant l'énergie électrique nécessaire à un moteur électrique principal pour le déplacement du véhicule, assurant le maintien à température constante du dispositif de stockage d'énergie, notamment en cas de températures extérieures faibles, afin d'améliorer la durée de vie du dispositif de stockage d'énergie. Le liquide caloporteur est alors injecté dans la première branche 10 afin d'effectuer un nouveau cycle de circulation.

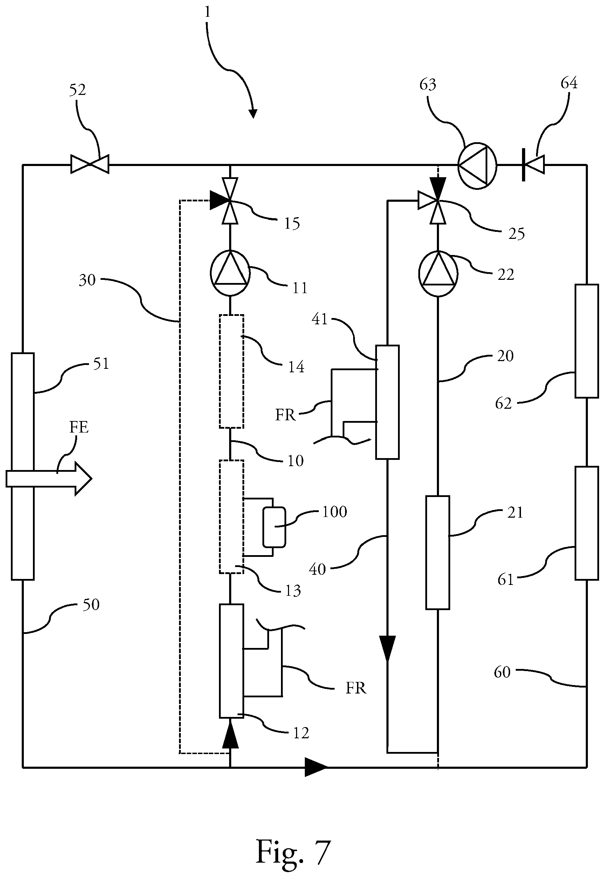

La figure 7 représente le circuit 1 illustré à la figure 4, le circuit 1 étant utilisé selon un mode d'utilisation permettant le refroidissement du premier composant de la chaine de traction électrique du véhicule, en particulier le refroidissement de la batterie, le premier composant de la chaine de traction électrique étant couplé thermiquement au troisième échangeur de chaleur 21 situé sur la deuxième branche 20.

Ainsi, le dispositif de bifurcation 25 impose la circulation du liquide caloporteur contenu dans la deuxième branche 20 entre la deuxième branche 20 et la quatrième branche 40, la deuxième pompe 22 étant activée. Autrement dit, le dispositif de bifurcation 25 interdit au liquide caloporteur circulant dans la deuxième branche 20 et dans la quatrième branche 40 d'être injecté dans la première branche 10, la troisième branche 30, la cinquième branche 50 ou la sixième branche 60. Le liquide caloporteur traverse donc le quatrième échangeur de chaleur 41 qui fonctionne alors comme évaporateur, configuré pour échanger des calories avec un fluide réfrigérant. Le liquide caloporteur traverse ensuite le troisième échangeur de chaleur 21, couplé thermiquement avec le premier composant de la chaine de traction électrique du véhicule, permettant ainsi le refroidissement de celui-ci. Enfin, le liquide caloporteur passe à travers la deuxième pompe 22 avant d'être réinjecté dans la quatrième branche 40.

Le mode de fonctionnement illustré à la figure 7 permet également la dissipation de calories captées au niveau du sixième échangeur de chaleur 61 et/ou du septième échangeur de chaleur 62 situés dans la sixième branche 60. Ainsi, le liquide circulant dans la sixième branche capte des calories générées par le deuxième et/ou le troisième composant de la chaine de traction électrique, le deuxième composant de la chaine de traction électrique étant un moteur électrique et le troisième composant de la chaine de traction électrique étant un module électronique de puissance, couplés thermiquement respectivement au sixième échangeur de chaleur 61 et au septième échangeur de chaleur 62, la troisième pompe 63 étant activée. Le liquide caloporteur contenu dans la sixième branche est alors dirigé, notamment par le dispositif de bifurcation 25 et l'organe de distribution 15, dans la cinquième branche 50, la vanne d'arrêt 52 étant dans une position ouverte permettant le passage du liquide caloporteur. Les calories du liquide caloporteur sont alors dissipées au niveau du cinquième échangeur de chaleur 51 au travers d'un flux d'air FE dirigé vers l'extérieur de l'habitacle du véhicule, le liquide caloporteur étant alors réinjecté dans la sixième branche 60 afin d'effectuer un nouveau cycle de circulation.

Pour dissiper les calories récupérées au niveau du quatrième échangeur de chaleur 41 de la quatrième branche 40, via le circuit de fluide réfrigérant FR, la première pompe 11 est activée, le liquide caloporteur circule dans la première branche 10. Le liquide caloporteur traverse alors le premier échangeur de chaleur 12 dans lequel il est réchauffé afin d'extraire les calories du fluide réfrigérant, le premier échangeur de chaleur 12 étant couplé thermiquement au circuit de fluide réfrigérant FR. L'organe de distribution 15 impose la circulation du liquide caloporteur depuis la première branche 10 vers la cinquième branche 50, la troisième branche 30 n'étant ainsi pas desservie par le liquide caloporteur. Le liquide caloporteur se mélange ainsi au liquide caloporteur en provenance de la sixième branche 60, puis traverse le cinquième échangeur de chaleur 51 afin d'être refroidi par un flux d'air extérieur FE afin de dissiper les calories récupérées lors du passage dans le premier échangeur de chaleur 12 de la première branche 10.

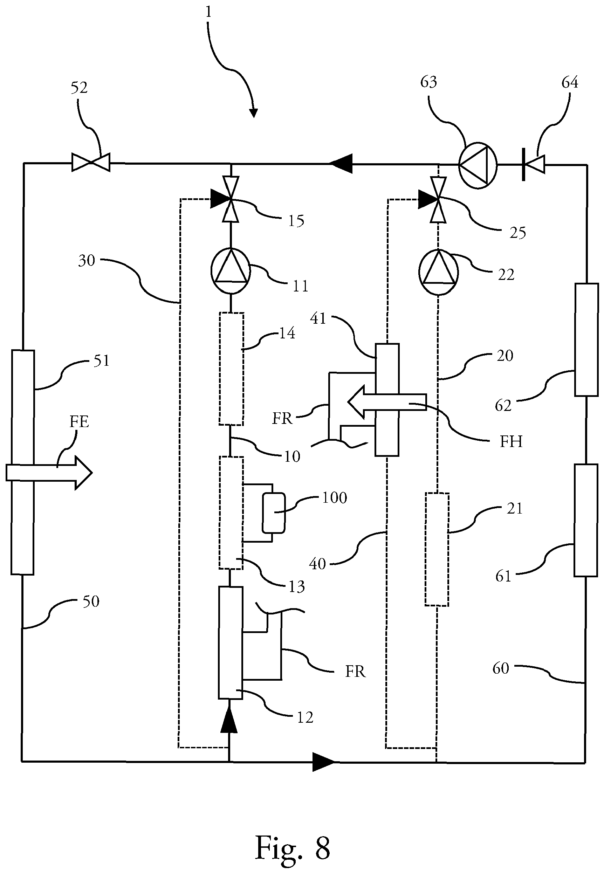

La figure 8 représente le circuit 1 illustré à la figure 4, le circuit 1 étant utilisé selon un mode d'utilisation permettant le refroidissement du deuxième composant et/ou du troisième composant de la chaine de traction électrique du véhicule couplés thermiquement au sixième échangeur de chaleur 61 et au septième échangeur de chaleur 62 de la sixième branche 60, respectivement.

Ainsi, le liquide caloporteur traverse le sixième échangeur de chaleur 61 puis le septième échangeur de chaleur 62, captant ainsi les calories générées par le deuxième composant et le troisième composant de la chaine de traction électrique du véhicule, la troisième pompe 63 étant activée. Le liquide caloporteur est alors injecté dans la cinquième branche 50 où il dissipe les calories, captées dans la sixième branche 60, au niveau du cinquième échangeur de chaleur 51, les calories étant dissipées grâce à un flux d'air extérieur FE. Le liquide caloporteur est alors injecté à nouveau dans la sixième branche 60 afin d'effectuer un nouveau cycle.

Le mode de fonctionnement illustré à la figure 8 permet également le refroidissement de l'habitacle du véhicule. Ainsi, la première pompe 11 étant activée, le liquide caloporteur circule dans la première branche 10. Le liquide caloporteur traverse alors le premier échangeur de chaleur 12 dans lequel il est réchauffé afin d'extraire les calories du fluide réfrigérant, le premier échangeur de chaleur 12 étant couplé thermiquement au circuit de fluide réfrigérant FR. Ainsi, le fluide réfrigérant, refroidi au niveau du premier échangeur de chaleur, est dirigé vers le quatrième échangeur de chaleur 41 traversé par un flux d'air FH destiné à être envoyé dans l'habitacle, permettant ainsi d'assurer le refroidissement de ce dernier. En outre, l'organe de distribution 15 impose la circulation du liquide caloporteur depuis la première branche 10 vers la cinquième branche 50, la troisième branche 30 n'étant ainsi pas desservie par le liquide caloporteur. Le liquide caloporteur se mélange au fluide caloporteur en provenance de la sixième branche 60, puis traverse le cinquième échangeur de chaleur 51 afin d'être refroidi par un flux d'air extérieur FE afin de dissiper les calories récupérées lors du passage dans le premier échangeur de chaleur 12 de la première branche 10.

D'autre part, dans ce mode de fonctionnement, la deuxième pompe 22 est désactivée, interdisant la circulation du liquide caloporteur dans la deuxième branche 20. De plus, le dispositif de bifurcation 25 est configuré de manière à interdire la circulation du liquide caloporteur dans la quatrième branche 40.

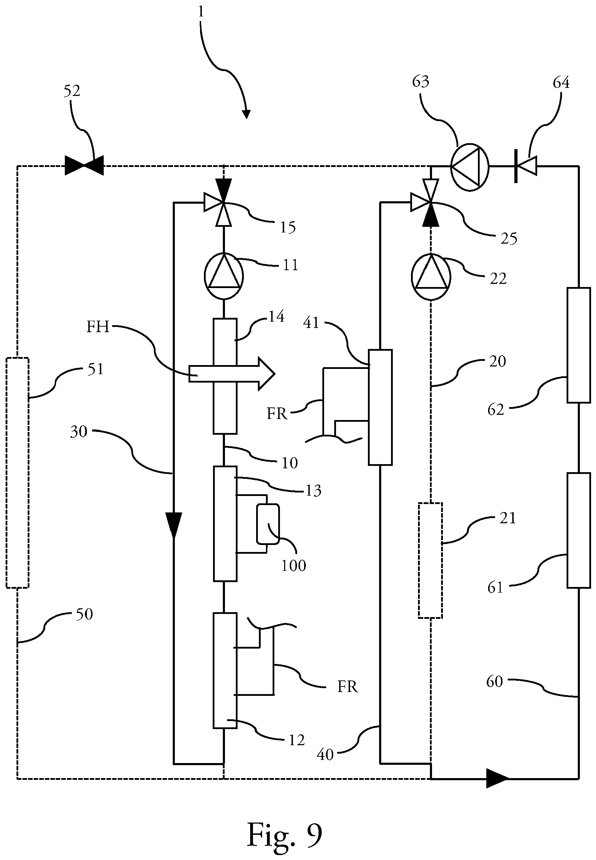

La figure 9 représente le circuit 1 illustré à la figure 4, le circuit 1 étant utilisé selon un mode d'utilisation permettant le refroidissement du deuxième composant et/ou du troisième composant de la chaine de traction électrique, tout en évitant un refroidissement du premier composant de la chaine de traction électrique.

Ainsi, le dispositif de bifurcation 25 impose la circulation du liquide caloporteur depuis la sixième branche 60 vers la quatrième branche 40, la troisième pompe 63 étant activée. Le liquide caloporteur traverse donc le sixième échangeur de chaleur 61 puis le septième échangeur de chaleur 62 disposés en série sur la sixième branche 60 et couplés thermiquement respectivement au deuxième composant et au troisième composant de la chaine de traction électrique. Le liquide caloporteur est alors dirigé vers la quatrième branche 40 par le dispositif de bifurcation 25, le dispositif de bifurcation 25 interdisant la circulation du liquide caloporteur dans la deuxième branche 20, et la deuxième pompe 22 étant désactivée. De plus, la vanne d'arrêt 52 est fermée, interdisant la circulation du liquide caloporteur dans la cinquième branche 50.

Cette configuration permet donc de diriger le liquide caloporteur depuis la sixième branche vers la quatrième branche 40, le liquide caloporteur dissipant les calories, captées dans la sixième branche 60, au niveau du quatrième échangeur de chaleur 41, couplé thermiquement à un circuit de fluide réfrigérant. Ainsi, les calories générées au niveau du premier composant de la chaine de traction électrique, couplé thermiquement au troisième échangeur de chaleur 21, ne sont pas dissipées par le liquide caloporteur dans ce mode, permettant, par exemple, dans le cas où le premier composant de la chaine de traction électrique est un dispositif de stockage d'énergie, d'éviter un refroidissement trop important du dispositif de stockage d'énergie afin de pouvoir le maintenir à température constante.

En outre, le mode de fonctionnement illustré à la figure 9 permet également le chauffage de l'habitacle du véhicule par l'intermédiaire du premier échangeur de chaleur 12 utilisé en tant que condenseur, ou du dispositif de chauffage électrique 13 alimenté électriquement par la source électrique 100. Ainsi, le liquide caloporteur contenu dans la première branche 10 circule entre la première branche 10 et la troisième branche 30, la circulation du liquide caloporteur contenu dans la première branche 10 étant imposée par l'organe de distribution 15. Le liquide caloporteur capte des calories au niveau du premier échangeur de chaleur 12 utilisé en tant que condenseur et/ou au niveau du dispositif de chauffage électrique 13 et dissipe ces calories au niveau du deuxième échangeur de chaleur 14 afin de permettre le chauffage d'un flux d'air FH envoyé dans l'habitacle.

Le premier échangeur de chaleur 12 et le quatrième échangeur de chaleur 41 sont couplés thermiquement au même circuit de fluide réfrigérant FR, le premier échangeur de chaleur 12 fonctionnant comme condenseur et le quatrième échangeur de chaleur 41 fonctionnant comme évaporateur. Cette configuration permet l'utilisation du circuit de fluide réfrigérant FR pour réaliser un cycle thermodynamique au niveau du circuit 1, permettant ainsi la réalisation de deux fonctions différentes au sein du circuit 1 à partir du circuit de fluide réfrigérant FR.

On comprend de ce qui précède que la présente invention permet ainsi d'assurer simplement et à coûts optimisés les buts que s'étaient fixée l'invention, en mettant à disposition un circuit de liquide caloporteur capable de réaliser une fonction de chauffage de l'habitacle du véhicule à partir d'un dispositif de chauffage électrique ou à partir d'un échangeur de chaleur utilisé en condenseur, une fonction de refroidissement de l'habitacle du véhicule, une fonction de chauffage ou de refroidissement d'un composant de la chaine de traction électrique du véhicule, une fonction de chauffage de l'habitacle à partir d'une boucle de fluide réfrigérant, et une fonction de récupération d'énergie sur un composant de la chaine de traction électrique.

Bien entendu, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Circuit de liquide caloporteur (1) pour véhicule électrique mis en mouvement au moins en partie par un moteur électrique, le circuit (1) comprenant une première branche (10) qui comporte au moins une pompe (11), un premier échangeur de chaleur (12) configuré pour échanger des calories entre le liquide caloporteur et un fluide réfrigérant, un dispositif de chauffage électrique (13) et un deuxième échangeur de chaleur (14) configuré pour échanger des calories entre le liquide caloporteur et un flux d'air destiné à être envoyé dans un habitacle du véhicule, le circuit (1) comprenant une deuxième branche (20) qui comprend un troisième échangeur de chaleur (21) couplé thermiquement à un composant d'une chaine de traction électrique du véhicule, le circuit (1) comprenant une troisième branche (30) disposée en parallèle de la première branche (10) et raccordée à cette dernière par un organe de distribution (15) du liquide caloporteur, **caractérisé en ce que** le circuit (1) comprend une quatrième branche (40) montée en parallèle de la deuxième branche (20) et raccordée à celle-ci par un dispositif de bifurcation (25), la quatrième branche (40) comprenant un quatrième échangeur de chaleur (41) configuré pour échanger des calories entre le liquide caloporteur et un fluide réfrigérant.

2. Circuit (1) de liquide caloporteur selon la revendication précédente, dans lequel les composants de la première branche (10) sont montés en série les uns par rapport aux autres.

3. Circuit (1) selon l'une quelconque des revendications précédentes, dans lequel le dispositif de chauffage électrique (13) est intercalé entre le premier échangeur de chaleur (12) et le deuxième échangeur de chaleur (14).

4. Circuit (1) selon l'une quelconque des revendications précédentes, dans lequel le dispositif de chauffage électrique (13) est configuré pour chauffer le liquide caloporteur à partir d'une énergie électrique haute tension.

5. Circuit (1) selon l'une quelconque des revendications précédentes, dans lequel la pompe (11) est intercalée entre l'organe de distribution (15) et le deuxième échangeur de chaleur (14).

6. Circuit (1) selon l'une quelconque des revendications précédentes, dans lequel la troisième branche (30) est dépourvue d'échangeur de chaleur.

7. Circuit (1) selon l'une quelconque des revendications précédentes, comprenant une cinquième branche (50) disposée en parallèle de la première branche (10), la cinquième branche (50) comprenant un cinquième échangeur de chaleur (51) configuré pour réaliser un échange de chaleur entre le liquide caloporteur et un flux d'air extérieur à l'habitacle du véhicule.

8. Circuit (1) selon la revendication précédente, dans lequel la cinquième branche (50) comprend une vanne d'arrêt (52).

9. Circuit (1) selon l'une quelconque des revendications 7 ou 8, comprenant une sixième branche (60) disposée en parallèle de la deuxième branche (20), la sixième branche (60) comprenant un sixième échangeur de chaleur (61) couplé thermiquement à un composant de la chaine de traction électrique du véhicule, appelé deuxième composant, différent du composant, appelé premier composant, couplé thermiquement au troisième échangeur de chaleur (21) présent dans la deuxième branche (20) du circuit (1).

## Patentansprüche

1. Wärmeträgerflüssigkeitskreislauf (1) für ein Elektrofahrzeug, das zumindest zum Teil von einem Elektromotor in Bewegung versetzt wird, wobei der Kreislauf (1) einen ersten Zweig (10) enthält, der mindestens eine Pumpe (11), einen ersten Wärmetauscher (12), der konfiguriert ist, Kalorien zwischen der Wärmeträgerflüssigkeit und einem Kühlmedium auszutauschen, eine elektrische Heizvorrichtung (13) und einen zweiten Wärmetauscher (14) aufweist, der konfiguriert ist, Kalorien zwischen der Wärmeträgerflüssigkeit und einem Luftstrom auszutauschen, der dazu bestimmt ist, in einen Innenraum des Fahrzeugs geschickt zu werden, wobei der Kreislauf (1) einen zweiten Zweig (20) enthält, der einen dritten Wärmetauscher (21) enthält, der thermisch an ein Bauteil eines elektrischen Antriebsstrangs des Fahrzeugs gekoppelt ist, wobei der Kreislauf (1) einen dritten Zweig (30) enthält, der parallel zum ersten Zweig (10) angeordnet und an diesen letzteren durch ein Verteilerorgan (15) der Wärmeträgerflüssigkeit angeschlossen ist, **dadurch gekennzeichnet, dass** der Kreislauf (1) einen vierten Zweig (40) enthält, der parallel zum zweiten Zweig (20) montiert und an diesen durch eine Abzweigvorrichtung (25) gekoppelt ist, wobei der vierte Zweig (40) einen vierten Wärmetauscher (41) enthält, der konfiguriert ist, Kalorien zwischen der Wärmeträgerflüssigkeit und einem Kühlfluid auszutauschen.

2. Wärmeträgerflüssigkeitskreislauf (1) nach dem vorhergehenden Anspruch, wobei die Bauteile des ersten Zweigs (10) zueinander in Reihe montiert sind.

3. Kreislauf (1) nach einem der vorhergehenden Ansprüche, wobei die elektrische Heizvorrichtung (13) zwischen dem ersten Wärmetauscher (12) und dem zweiten Wärmetauscher (14) eingefügt ist.

4. Kreislauf (1) nach einem der vorhergehenden Ansprüche, wobei die elektrische Heizvorrichtung (13) konfiguriert ist, die Wärmeträgerflüssigkeit ausgehend von einem Hochspannungsstrom zu erwärmen.

5. Kreislauf (1) nach einem der vorhergehenden Ansprüche, wobei die Pumpe (11) zwischen dem Verteilerorgan (15) und dem zweiten Wärmetauscher (14) eingefügt ist.

6. Kreislauf (1) nach einem der vorhergehenden Ansprüche, wobei der dritte Zweig (30) keinen Wärmetauscher aufweist.

7. Kreislauf (1) nach einem der vorhergehenden Ansprüche, der einen fünften Zweig (50) enthält, der parallel zum ersten Zweig (10) angeordnet ist, wobei der fünfte Zweig (50) einen fünften Wärmetauscher (51) enthält, der konfiguriert ist, einen Wärmeaustausch zwischen der Wärmeträgerflüssigkeit und einem Luftstrom außerhalb des Innenraums des Fahrzeugs durchzuführen.

8. Kreislauf (1) nach dem vorhergehenden Anspruch, wobei der fünfte Zweig (50) einen Absperrschieber (52) enthält.

9. Kreislauf (1) nach einem der Ansprüche 7 oder 8, der einen sechsten Zweig (60) enthält, der parallel zum zweiten Zweig (20) angeordnet ist, wobei der sechste Zweig (60) einen thermisch an ein zweites Bauteil genanntes Bauteil des elektrischen Antriebsstrangs des Fahrzeugs gekoppelten sechsten Wärmetauscher (61) enthält, anders als das erstes Bauteil genannte Bauteil, das thermisch an den im zweiten Zweig (20) des Kreislaufs (1) vorhandenen dritten Wärmetauscher (21) gekoppelt ist.

## Claims

1. Heat-transfer liquid circuit (1) for an electric vehicle that is propelled at least in part by an electric motor, the circuit (1) comprising a first leg (10) that has at least one pump (11), a first heat exchanger (12) configured to exchange heat energy between the heat-transfer liquid and a refrigerant, an electric heating device (13) and a second heat exchanger (14) configured to exchange heat energy between the heat-transfer liquid and a flow of air intended to be sent into a vehicle interior, the circuit (1) comprising a second leg (20) that comprises a third heat exchanger (21) thermally coupled to a component of an electric powertrain of the vehicle, the circuit (1) comprising a third leg (30) that is disposed in parallel with the first leg (10) and connected to the latter by a member (15) for distributing the heat-transfer liquid, **characterized in that** the circuit (1) comprising a fourth leg (40) that is mounted in parallel with the second leg (20) and connected thereto by a branching device (25), the fourth leg (40) comprising a fourth heat exchanger (41) configured to exchange heat energy between the heat-transfer liquid and a refrigerant.

2. Heat-transfer liquid circuit (1) according to the preceding claim, wherein the components of the first leg (10) are mounted in series with one another.

3. Circuit (1) according to either one of the preceding claims, wherein the electric heating device (13) is interposed between the first heat exchanger (12) and the second heat exchanger (14).

4. Circuit (1) according to any one of the preceding claims, wherein the electric heating device (13) is configured to heat the heat-transfer liquid using highvoltage electrical energy.

5. Circuit (1) according to any one of the preceding claims, wherein the pump (11) is interposed between the distribution member (15) and the second heat exchanger (14) .

6. Circuit (1) according to any one of the preceding claims, wherein the third leg (30) does not have a heat exchanger.

7. Circuit (1) according to any one of the preceding claims, comprising a fifth leg (50) disposed in parallel with the first leg (10), the fifth leg (50) comprising a fifth heat exchanger (51) configured to effect heat exchange between the heat-transfer liquid and a flow of air exterior to the vehicle interior.

8. Circuit (1) according to the preceding claim, wherein the fifth leg (50) comprises a shut-off valve (52) .

9. Circuit (1) according to either one of Claims 7 and 8, comprising a sixth leg (60) disposed in parallel with the second leg (20), the sixth leg (60) comprising a sixth heat exchanger (61) thermally coupled to a component of the electric powertrain of the vehicle, referred to as the second component, which is different from the component, referred to as the first component, that is thermally coupled to the third heat exchanger (21) present in the second leg (20) of the circuit (1).
